# EUROPÄISCHE PATENTANMELDUNG

(11) **EP 0 648 591 A1**
(43) Veröffentlichungstag der Anmeldung: **19.04.1995**
(21) Anmeldenummer: 94115716.6
(22) Anmeldetag: 06.10.1994
(51) Int. Cl.: B29C 45/67

(54) **Formschliesseinheit für eine Kunststoff-Spritzgiessmaschine**

(30) Priorität: 14.10.1993 DE 4335006
(71) Anmelder: Hehl, Karl, D-72290 Lossburg (DE)
(72) Erfinder: Hehl, Karl, D-72290 Lossburg (DE)
(74) Vertreter: Reinhardt, Harry

(57) **Zusammenfassung**

Eine Formschließeinheit für eine Kunststoff-Spritzgießmaschine weist einen hydraulischen Druckzylinder mit Hochdruckraum (H) und Niederdruckraum (N), die über einen Überströmkanal (42) miteinander verbindbar sind, eine hydraulische Antriebszylinderkolbeneinheit, die über die Leitungen mit Hydraulikmedium beaufschlagbar ist, sowie ein Ventil zum Öffnen und Schließen des Überströmkanals (42) auf, das aus hydraulisch beaufschlagbaren Zylinderräumen in und außer Verschlußstellung überführbar ist. Dadurch, daß die Antriebszylinderkolbeneinheit oder die die Antriebszylinderkolbeneinheit mit Hydraulikmedium versorgende Leitung in offener Verbindung mit dem die Öffnung des Ventils bewirkenden Zylinderraum (25) steht, wird erreicht, daß eine optimale Öffnung des Überströmkanals bei geringem Aufwand möglich ist.

## Beschreibung

Die vorliegende Erfindung betrifft eine Formschließeinheit für eine Kunststoff-Spritzgießmaschine nach dem Oberbegriff des Anspruchs 1. Bei einer gattungsgemäßen Formschließeinheit nach der DE- C 28 45 448 ist ein Hydraulikraum eines Druckzylinders zum Aufbringen des Zuhaltedrucks während des Formschlusses vorgesehen, der mit einem Niederdruckraum über einen Übertrömkanal in Verbindung steht. Der Überströmkanal ist durch eine auf einer Kolbenstange des Druckzylinders axial bewegliche Ventilhülse verschließbar. Die Ventilhülse ist über gesondert beaufschlagbare und durch gesonderte Steuerkreise ansteuerbare Zylinderräume in und außer Verschlußstellung überführbar. Durch diese Ausbildung ist zwar sichergestellt, daß der Überströmkanal gezielt auf- und zugesteuert werden kann, jedoch ist dafür ein zusätzlicher Bauteil- und Regelaufwand erforderlich, da ein gesonderter Steuerkreis hierfür notwendig ist.

Bei einer Formschließeinheit nach der DE-C 36 44 181 ist der Antriebszylinder für den beweglichen Formträger zentrisch in der Kolbenstange des Druckzylinders angeordnet. Im Druckzylinder sind Niederdruckraum und Hochdruckraum durch einen mittels Ventilhülse verschließbaren Druckkolben voneinander getrennt. Die Ventilhülse kann dabei aktiv geschlossen werden und öffnet passiv, sobald der das Schließen der Ventilhülse bewirkende Zylinderraum drucklos gemacht wird. Das Öffnen wird dadurch unterstützt, daß die Ventilhülse einen Hinterschnitt besitzt, so daß der im Hochdruckraum beim Öffnen des Überströmkanals noch vorhandene Druck zunächst das Öffnen bewirkt. Sobald jedoch der Überströmkanal geöffnet ist, findet ein Druckausgeleich zwischen Niederdruckraum und Hochdruckraum statt, so daß nicht genau feststellbar ist, wie weit die Ventilhülse geöffnet hat. Somit ist die Ventilöffnung grundsätzlich abhängig von der Fahrgeschwindigkeit.

Ausgehend von diesem Stand der Technik liegt der Erfindung die Aufgabe zugrunde, eine Formschließeinheit der eingangs genannten Gattung derart weiterzubilden, daß eine optimale Öffnung des Überströmkanals bei geringem Aufwand erzielbar ist.

Diese Aufgabe wird durch die Merkmale des Anspruchs 1 gelöst.

Die offene Verbindung zwischen dem die Öffnung des Ventils bewirkenden Zylinderraum und der Antriebszylinderkolbeneinheit oder deren Versorgungsleitung hat den Vorteil, daß dieser Zylinder grundsätzlich immer dann beaufschlagt wird, wenn auch der Überströmkanal geöffnet sein muß. Ist die Spritzgießform nämlich geschlossen oder die Formschließeinheit geöffnet, so ist auch die Versorgungsleitung für die Antriebszylinderkolbeneinheit drucklos, so daß das Ventil geschlossen ist oder durch Beaufschlagung aus dem das Schließen des Ventils bewirkenden Zylinderraum zuverlässig geschlossen werden kann. Beim Öffnen und/oder Schließen der Spritzgießform steht die Versorgungsleitung des Zylinders unter Druck, so daß auch der die Öffnung des Ventils bewirkende Zylinderraum mit dem gleichen Druck beaufschlagbar ist. Insofern kann zuverlässig ein ohnehin vorhandener Druck durch eine einfache weitere Bohrung dafür eingesetzt werden, das Ventil zuverlässig zu öffnen.

Bei einer Ausbildung nach Anspruch 2 sind an der Formschließeinheit nur noch drei Drücke und somit drei Regelkreise für den Druck erforderlich, nämlich der Druck im Hochdruckraum, der Druck im Niederdruckraum und der Druck im Antriebszylinder.

Gemäß Anspruch 3 kann bei einer bekannten kompakten Formschließeinheit die Erfindung dadurch einfach ausgenutzt werden, daß lediglich eine weitere Bohrung vorgesehen wird, vor allem wenn gemäß Anspruch 6 die Bohrungen in der konzentrisch zu einer Mittelachse des Fahrzylinders angeordneten Kolbenstange als Axialbohrungen vorgesehen sind.

Weitere Vorteile ergeben sich aus den Unteransprüchen. Im folgenden wird die Erfindung anhand eines Ausführungsbeispiels näher erläutert. Es zeigen:

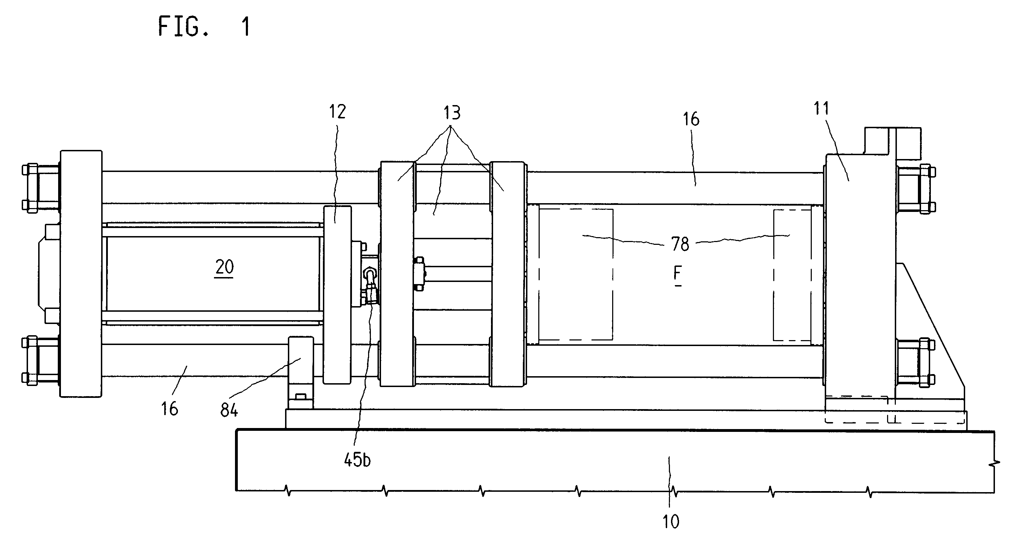

- Fig. 1: die formschließseitige Seitenansicht einer Kunststoff-Spritzgießmaschine

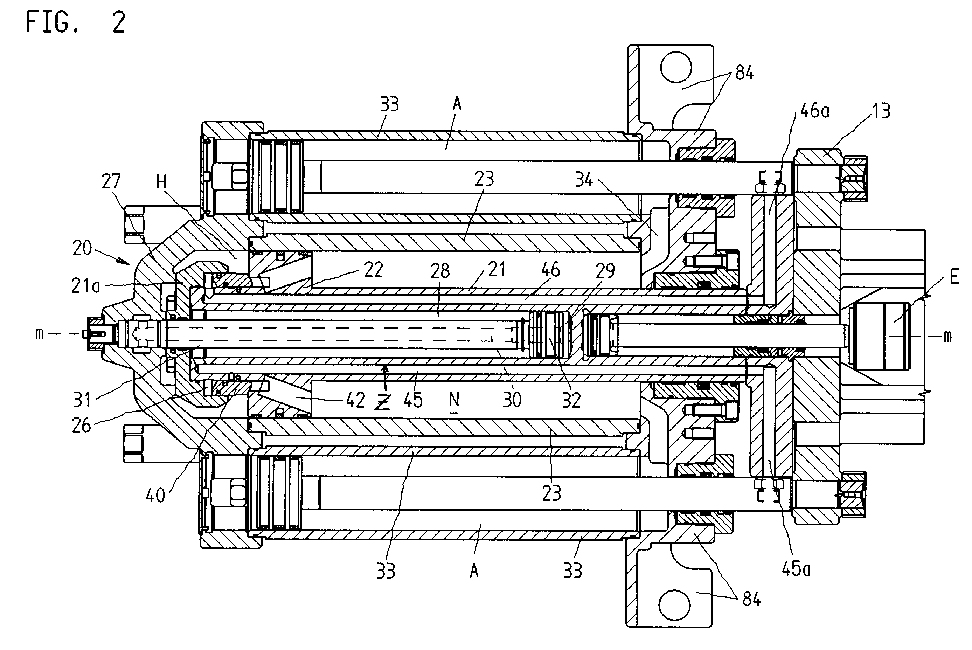

- Fig. 2: einen Horizontal schnitt durch die Spritzgießmaschine in Höhe eines Antriebszylinders
- Fig. 3, 5: einen vergrößerten Ausschnitt aus der Darstellung von Fig. 2 im Bereich der Ventilhülse bei geschlossener und geöffneter Ventilhülse,
- Fig. 4: einen Vertikalschnitt nach Linie IV-IV von Fig. 3,
- Fig. 6: den Hydraulikkreislauf in schematischer Darstellung.

Ein stationärer Formträger 11 und eine Montageplatte 12 sind am Maschinenfuß 10 befestigt und über Säulen 16 zu einem starren Rahmen miteinander verbunden. Anstelle der Säulen 16 können selbstverständlich auch andere Verformungselemente vorgesehen sein, die die Kräfte um den Formspannraum herumleiten. Auf den Säulen 16 ist ein bewegbarer Formträger 13 verschiebbar gelagert und durch eine Hydraulikeinrichtung auf den stationären Formträger 11 hin und von diesem weg bewegbar.

Die Hydraulikeinrichtung umfaßt einen hydraulischen Druckzylinder 20 zum Aufbau des Zuhaltedruckes, dessen Druckkolben 22 über eine Kolbenstange 21 mit dem beweglichen Formträger 13 verbunden ist. Druckkolben 22 und Kolbenstange 21 sind einstückig miteinander verbunden und trennen in dem durch eine Stahlhülse gebildeten Druckzylinder 20 einen Hochdruckraum H und einen Niederdruckraum N. Die Stahlhülse 23 ist von einem Zylinderdeckel 27 und einem Stützelement 84 aufgenommen, die die Zylinderräume stirnseitig abschließen. Die vom Druckkolben 22 begrenzten Zylinderräume (Hochdruckraum und Niederdruckraum) stehen über Überströmkanäle 42 des Druckkolbens 22 miteinander in Verbindung.

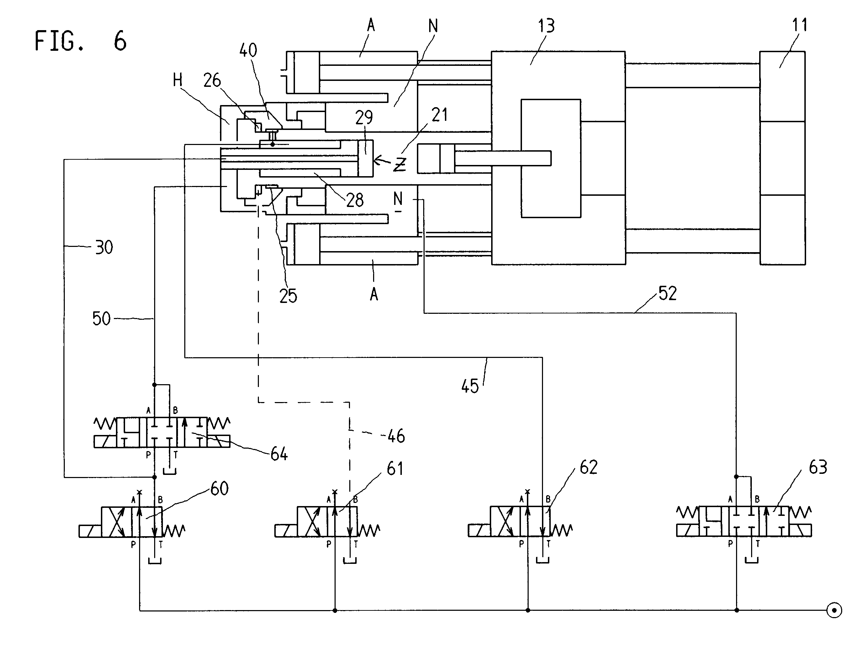

Der Zylinderdeckel 27 und das Stützelement 84 dienen zugleich auch als stirnseitige Abschlüsse der ebenfalls als Stahlhülsen 33 ausgebildeten Ausgleichszylinder A. Im Ausführungsbeispiel sind dabei die Ausgleichszylinder auf beiden Seiten des Druckzylinders 20 angeordnet. Im Druckzylinder ist konzentrisch zu einer Mittelachse m-m des Druckzylinders 20 eine Antriebszylinderkolbeneinheit mit Antriebszylinder D (Fig. 6) und Kolben 32 zum Bewegen des beweglichen Formträgers 13 in und außer Schließposition vorgesehen. Diese Einheit ist über Leitungen oder Bohrungen 45 mit Hydraulikmedium beaufschlagbar.

Der Überströmkanal 42 ist durch ein Ventil zu öffnen und zu schliessen, das im Ausführungsbeispiel eine hydraulisch betätigbare Ventilhülse ist. Bei der Öffnungs- und Schließbewegung sind die Überströmkanäle zwischen Hochdruckraum H und Niederdruckraum N geöffnet. Der Kolben 32 des Antriebszylinders D ist stationär mit dem stationären Zylinderdeckel des Druckzylinders 20 verbunden. Bei Beaufschlagung des Zylinderraumes 29 über die Leitung 30 ergibt sich daher eine Bewegung des Antriebszylinders D, der zugleich die Kolbenstange 21 des Druckzylinders 20 bildet. Bei der Schließbewegung des Antriebszylinders wird dabei das Öl über die Überströmkanäle 42 einerseits in den Hochdruckraum geleitet, andererseits wird durch die Bewegung auch das Volumen der einseitig beaufschlagbaren Ausgleichszylinder A geringer, da deren Kolben mit dem bewegbaren Formträger verbunden sind, so daß das dort verdrängte Hydraulikmedium über den Verbindungskanal 34 dem Niederdruckraum und dem Hochdruckraum zugeführt wird.

Das Ventil zum Öffnen und Schließen des Überströmkanals 42 ist hydraulisch aus Zylinderräumen in und außer Verschlußstellung überführbar. Die Antriebszylinderkolbeneinheit selbst z.B. über eine gesonderte weitere Bohrung oder Leitung oder die die Antriebszylinderkolbeneinheit D mit Hydraulikmedium versorgende Leitung (Bohrung 45) steht in offener Verbindung mit dem die Öffnung des Ventils bewirkenden Zylinderraum 25. Im Ausführungsbeispiel steht der das Öffnen der Formschließeinheit bewirkende Zylinderraum 28 des Antriebszylinders D in offener Verbindung mit dem die Öffnung des Ventils bewirkenden Zylinderraum 25.

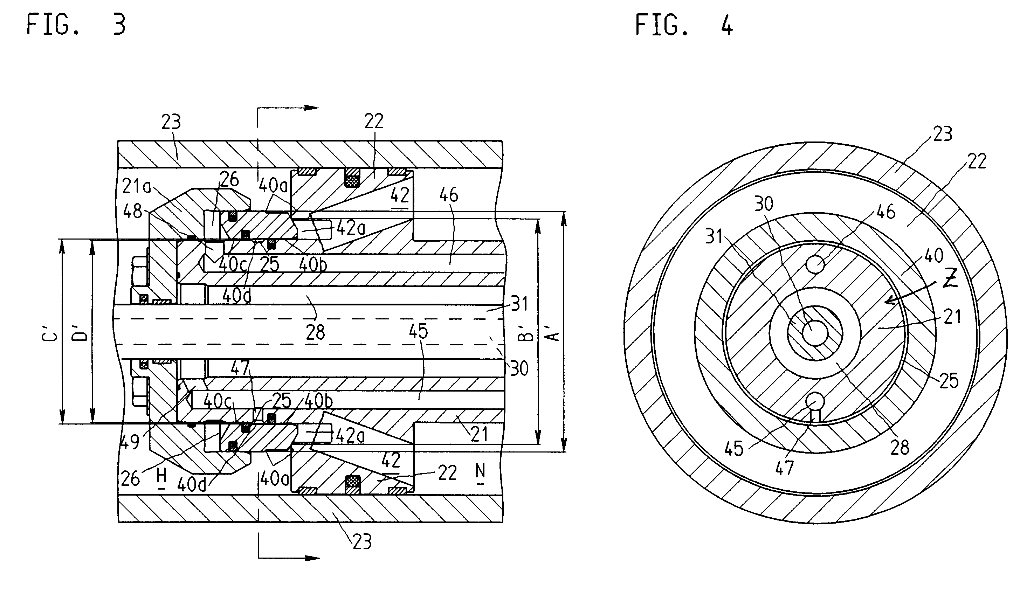

Nach den Fign. 3-5 sind im Druckkolben 22 des Druckzylinders 20 die Überströmkanäle 42 angeordnet, die durch eine auf der Kolbenstange 21 axial bewegliche Ventilhülse verschließbar sind. Die Ventilhülse 40 bildet mit einer Ringschulter 21a der Kolbenstange 21 den Zylinderraum 26 für das Schließen der Ventilhülse aus. Dieser Zylinderraum 26 ist gesondert über die Bohrung 46 ansteuerbar. Zwischen Ventilhülse und Kolbenstange ist aber auch der Zylinderraum 25 vorgesehen, der aus der axialen Bohrung 45 mit Hydraulikmedium versorgbar ist. Diese axiale Bohrung 45 dient zugleich der Versorgung des Zylinderraums 28, der bei Beaufschlagung das Öffnen der Formschließeinheit bewirkt. Beide Leitungen für die Versorgung der Zylinderräume 25, 26 des Ventils sind durch in der Kolbenstange 21 des Druckzylinders vorgesehene Axialbohrungen 45, 46 gebildet, die über Radialbohrungen 47, 48 mit den Zylinderräumen in Verbindung stehen. Die axiale Bohrung 45 steht über eine Verbindungsbohrung 49 wiederum mit dem Zylinderraum 28 in Verbindung.

Der zum Öffnen der Ventilhülse 40 vorgesehene Zylinderraum 25 ist durch die äußere Mantelfläche 21b der Kolbenstange 21 und die innere Mantelfläche 40b der Ventilhülse 40 begrenzt. Um einen Zylinderraum zu bilden, ist der Durchmesser der durch eine Stahlhülse gebildeten Kolbenstange 21 im Endbereich 21c etwas verringert, und die im Querschnitt trapezförmige Ventilhülse 40 liegt mit einem Bereich kleineren Innendurchmessers 40c an diesem Endbereich 21c und mit einem Bereich größeren Innendurchmessers 40d an der Mantelfläche 21b an, wobei im Übergangsbereich zwischen den unterschiedlichen Innendurchmessern der Zylinderraum 25 ausgebildet ist. Darüber hinaus besitzt die Ventilhülse radial außen an ihrem dem Niederdruckraum zugewandten Ende einen mit dem Hochdruckraum H in Verbindung stehenden, radial nach innen gerichteten Hinterschnitt (Fig. 3). Auch in geschlossener Stellung steht dieser Hinterschnitt noch mit dem Hochdruckraum H in Verbindung, während der Rest der Ventilhülse 40 an diesem Ende den eigentlichen Verschlußabschnitt 42a des Überströmkanals 42 verschließt. Über Anschlußstutzen 45b und Anschlußbohrungen 45a und 46a sind die axialen Bohrungen 45, 46 mit Hydraulikmedium versorgt. Koaxial zum Antriebszylinder D ist ein Auswerfzylinder E angeordnet, jedoch sind hier auch andere Anordnungen denkbar, insbesondere wenn mehrere Druckzylinder nebeneinander angeordnet sind.

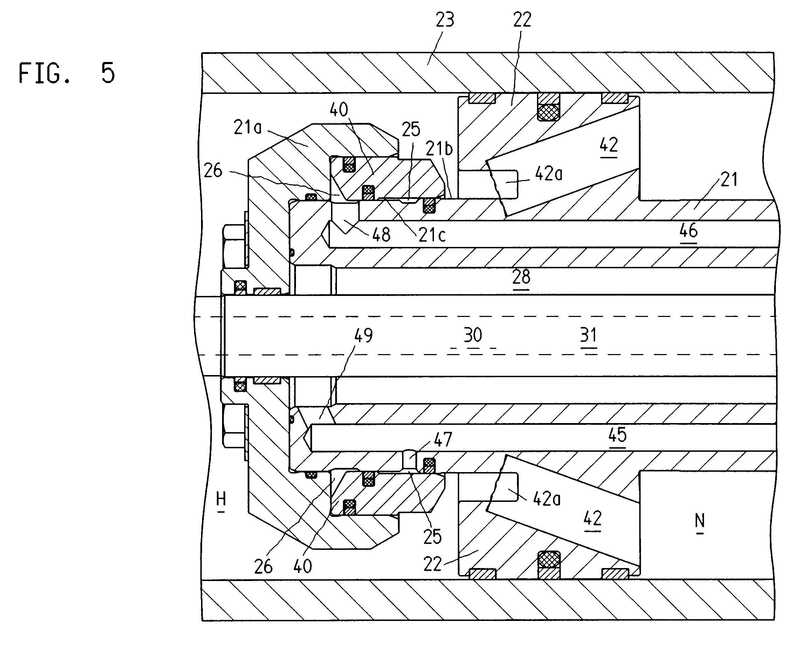

Die Vorrichtung arbeitet grundsätzlich wie folgt:
War die Spritzgießform 78 geschlossen, ergibt sich im Bereich des Ventils ein Bild wie in Fig. 3. Die Ventilhülse 40 verschließt den Verschlußabschnitt 42a des Überströmkanals 42. Soll nun die Spritzgießform geöffnet werden, so muß das im Hochdruckraum vorhandene Hydraulikmedium in den Niederdruckraum N und in die Ausgleichszylinder A abgeleitet werden. Es ist erforderlich, daß der Überströmkanal geöffnet wird. Hierzu wird zunächst der Zylinderraum 26, der das Schließen der Ventilhülse 40 bewirkt, drucklos gemacht. In diesem Moment greift dann der Druck im Hochdruckraum über die Kreisfläche A' abzüglich Kreisfläche B', also im Bereich des Hinterschnitts 40a an der Ventilhülse an, so daß sich eine Öffnungsbewegung des Ventils ergibt. Sobald jedoch die Ventilhülse wenige Millimeter geöffnet ist, findet ein Druckausgleich auf beiden Seiten des Ventils statt, so daß keine resultierende Kraft zum Öffnen mehr vorhanden ist. Zur Bewegung des beweglichen Formträgers wird jedoch auch der Zylinderraum 28 des Antriebszylinders D über die Bohrung 45 mit Hydraulikmedium versorgt. Diese Bohrung ist über die Radialbohrung 47 mit dem Zylinderraum 25 verbunden, so daß auch im Zylinderraum 25 ein Druck entsteht, der über die Kreisfläche C' minus Kreisfläche D' an der Ventilhülse 40 angreift und diese in eine Stellung gemäß Fig. 5 steuert. Durch diese Bewegung ist sichergestellt, daß das Ventil zuverlässig geöffnet ist, so daß der Überströmkanal so geöffnet ist, daß auch größere Mengen an Hydraulikmedium schnell überströmen können. Dadurch werden aber die Zykluszeiten deutlich reduziert.

Gleichgültig, ob der Antriebszylinder D einseitig oder beidseitig beaufschlagbar ist, also gleichgültig ob die Schließbewegung aus dem Zylinderraum 29 oder aus dem Hochdruckraum erfolgt, ist in diesem Moment der für das Öffnen der Spritzgießform zuständige Zylinderraum 28 drucklos und somit auch die axiale Bohrung 45 nicht beaufschlagt, so daß auch der Zylinderraum 25 drucklos ist. In diesem Moment sorgt das aus Ausgleichszylindern und Niederdruckraum in den Hochdruckraum einströmende Hydraulikmedium allein für das Öffnen der Ventilhülse 40. Beim Schließen der Spritzgießform kann aber auch im Zylinderraum 28 und der Bohrung 45 ein Restdruck vorhanden sein oder eingestellt werden, so daß das im Zylinderraum 28 verdrängte Hydraulikmedium auch jetzt den Überströmkanal aktiv öffnet.

Sobald die Spritzgießform 78 geschlossen ist, wird dann die Ventilhülse 40 aktiv aus dem Zylinderraum 26 zugesteuert, so daß der Zuhaltedruck aufgebaut werden kann.

Aus Fig. 6 ergibt sich die hydraulische Schaltung beim Öffnen der Spritzgießform. Über die Leitung oder Bohrung 45 und das Ventil 62, das hierzu in der Versorgungsstellung steht, wird der Zylinderraum 25 und der Zylinderraum 28 mit Druckmedium beaufschlagt. Dies führt infolge der Relativbewegung des Zylinders des Fahrzylinders zu einer Verkleinerung des Zylinderraums 29, dessen Hydraulikmedium über die Versorgungsleitung 30, die als Axialbohrung in der Kolbenstange 31 des Antriebszylinders D ausgebildet ist, und über das Ventil 60 abgeleitet werden kann. Über die axiale Bohrung 46 und das Ventil 61 steht zudem der das Schließen der Ventilhülse 40 bewirkende Zylinderraum 26 mit dem Tank in Verbindung. Die Ventile 63 und 64 sind in diesem Zeitraum weitgehend ohne Bedeutung, da versucht wird, das Hydraulikmedium an der Maschine zu halten und nicht für jeden Spritzzyklus in die entsprechenden Räume zurückzupumpen. Aus diesem Grund ist auch das Maximalvolumen des Hochdruckraums ungefähr gleich den Volumina von Niederdruckraum und Ausgleichszylindern. Dennoch können bedarfsweise auch über die Ventile 63 und 64 und die Leitungen 50 und 52 Hydraulikflüssigkeiten in die angeschlossenen Hochdruck- bzw. Niederdruckräume eingeleitet werden.

## Patentansprüche

1. Formschließeinheit für eine Kunststoffspritzgießmaschine mit
- wenigstens einem hydraulischen Druckzylinder (20) zum Aufbau des Zuhaltedrucks, dessen Hochdruckraum (H) über wenigstens einen Überströmkanal (42) mit einem Niederdruckraum (N) verbindbar ist,
- wenigstens einer hydraulischen Antriebszylinderkolbeneinheit mit Antriebszylinder (D) und Kolben (32) zum Bewegen eines beweglichen Formträgers (13) in und außer Schließposition mit einem stationären Formträger (11), wobei diese Einheit über Leitungen (Bohrungen 30,45) mit Hydraulikmedium beaufschlagbar ist und
- wenigstens einem Ventil zum Öffnen und Schließen des Überströmkanals (42), das aus hydraulisch beaufschlagbaren Zylinderräumen (25, 26) in und außer Verschlußstellung überführbar ist,
dadurch gekennzeichnet, daß die Antriebszylinderkolbeneinheit oder die die Antriebszylinderkolbeneinheit mit Hydraulikmedium versorgende Leitung (Bohrung 45) in offener Verbindung mit dem die Öffnung des Ventils bewirkenden Zylinderraum (25) steht.

2. Formschließeinheit nach Anspruch 1, dadurch gekennzeichnet, daß der das Öffnen der Formschließeinheit bewirkende Zylinderraum (28) des Antriebszylinders (D) in offener Verbindung mit dem die Öffnung des Ventils bewirkenden Zylinderraum (25) steht.

3. Formschließeinheit nach Anspruch 1 oder 2, dadurch gekennzeichnet, daß der Antriebszylinder (D) zugleich Kolbenstange (21) eines mit dem beweglichen Formträger verbundenen Druckkolbens (22) des Druckzylinders (20) ist, wobei der Druckkolben (22) von Überströmkanälen (42) durchdrungen ist, und daß das Ventil eine auf der Kolbenstange (21) axial bewegliche Ventilhülse (40) ist.

4. Formschließeinheit nach Anspruch 3, dadurch gekennzeichnet, daß die Ventilhülse (40) mit einer Ringschulter (21a) der Kolbenstange (21) den Zylinderraum (26) für das Schließen der Ventilhülse bildet, der über eine Leitung (Bohrung 46) gesondert ansteuerbar ist.

5. Formschließeinheit nach einem der vorhergehenden Ansprüche, dadurch gekennzeichnet, daß die Leitungen für die Versorgung der Zylinderräume (25, 26) des Ventils durch an der Kolbenstange (21) des Druckkolbens (22) vorgesehene Axialbohrungen (45, 46) gebildet sind, die über Radialbohrungen (47,48) mit den Zylinderräumen (25, 26) in Verbindung stehen.

6. Formschließeinheit nach einem der vorhergehenden Ansprüche, dadurch gekennzeichnet, daß das dem Niederdruckraum (N) zugewandte Ende der als Ventil ausgebildeten Ventilhülse (40) einen mit dem Hochdruckraum (H) in Verbindung stehenden, radial nach innen gerichteten Hinterschnitt (40a) aufweist.

7. Formschließeinheit nach einem der vorhergehenden Ansprüche, dadurch gekennzeichnet, daß der zum Öffnen des Ventils vorgesehene Zylinderraum (25) durch eine äußere Mantelfläche (21b) einer Kolbenstange (21) des Druckzylinders (20) und eine innere Mantelfläche (40b) des Ventils (40) begrenzt ist.

8. Formschließeinheit nach einem der vorhergehenden Ansprüche, dadurch gekennzeichnet, daß der Durchmesser der durch eine Stahlhülse gebildeten Kolbenstange (21) unter Bildung des Zylinderraumes (25) für das Öffnen des Ventils im Endbereich (21c) verringert ist.

9. Formschließeinheit nach einem der Ansprüche 3-8, dadurch gekennzeichnet, daß die im Querschnitt trapezförmige Ventilhülse (40) mit einem Bereich kleineren Innendurchmessers (40c) am Endbereich (21c) der Kolbenstange (21) und mit einem Bereich größeren Innendurchmessers (40d) an der Mantelfläche (21b) der Kolbenstange (21) anliegt, wobei im Übergangsbereich zwischen den unterschiedlichen Innendurchmessern der Zylinderraum (25) zum Öffnen der Ventilhülse ausgebildet ist.
